# EUROPEAN PATENT APPLICATION

(11) **EP 2 654 213 A1**
(43) Date of publication of application: **23.10.2013**
(21) Application number: 12164591.5
(22) Date of filing: 18.04.2012
(51) Int. Cl.: H04B 1/38

(54) **Cover for actuating a mobile electronic device sensor**

(71) Applicant: BlackBerry Limited, Waterloo, ON N2L 3W8 (CA)
(72) Inventor: Aldana, Leonardo, Waterloo, Ontario N2L 3W8 (CA)
(74) Representative: Finnie, Peter John

(57) **Abstract**

A mobile electronic device has a sensor responsive to a magnetic field. A cover for the device has a body portion defining an interior cavity for receiving the mobile electronic device. A magnet and a ferrous metal element are carried by the cover. The ferrous metal element is magnetized by the magnet and positioned to be adjacent the sensor when the mobile electronic device is received in the interior cavity.

## Description

### BACKGROUND

A mobile electronic device can be a cellular phone, including a smart phone, a dedicated personal digital assistant (PDA) with or without phone or data capabilities, an electronic reading device, a tablet computer, a digital media player, or any other mobile device. In many instances, the terms "mobile device," "hand held device" and "hand set" are interchangeable, both regarding to electronic devices available as information stores for personal contacts, calendar appointments, and the like. Mobile electronic devices are often carried in a cover. Some covers have magnets that are used to actuate sensors of the device.

### DESCRIPTION OF DRAWINGS

FIG. 1A is a front view of a cover for a mobile electronic device with the cover shown open and the mobile electronic device inside.

FIG. 1B is a front view of the cover shown closed.

FIG. 2A is a side view of the cover of FIGS. 1A and 1B shown closed.

FIG. 2B is a half, side cross-sectional detail view of the cover of FIGS. 1A and 1B showing a magnetic clasp.

FIG. 2C is an alternate half, side cross-sectional detail view showing the magnetic clasp.

FIG. 3 is a front view of the cover of FIGS. 1A and 1B with the cover shown closed and material of the cover cut-away to show parts of the magnetic clasp.

FIG. 4 is a front view of another cover for a mobile electronic device with the cover shown closed and material of the cover cut-away to show parts of magnetic clasp and ferrous metal element.

Like reference symbols in the various drawings indicate like elements.

### DETAILED DESCRIPTION

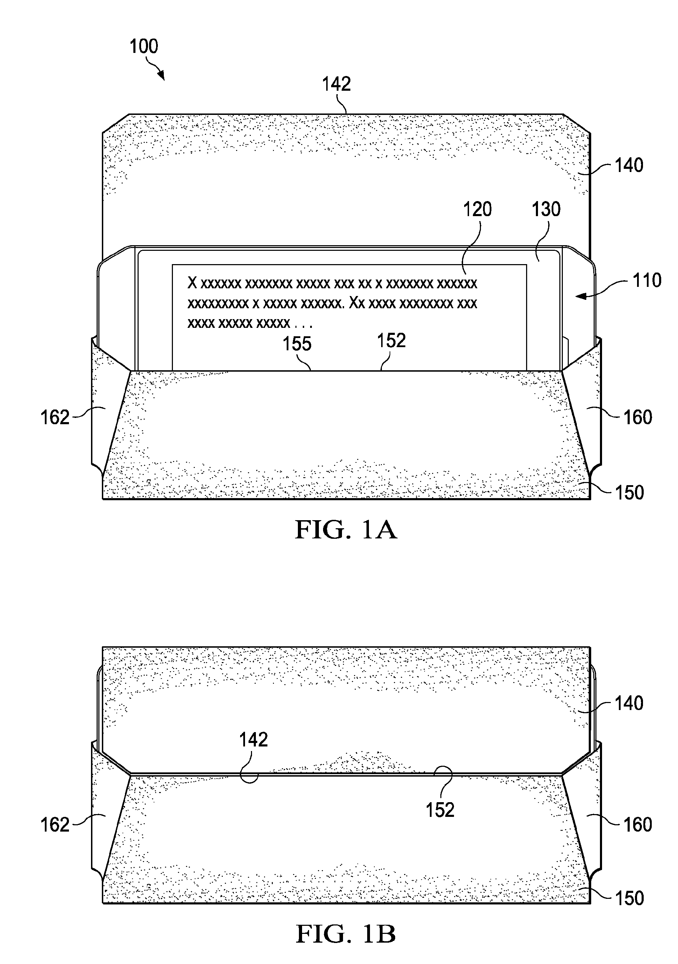

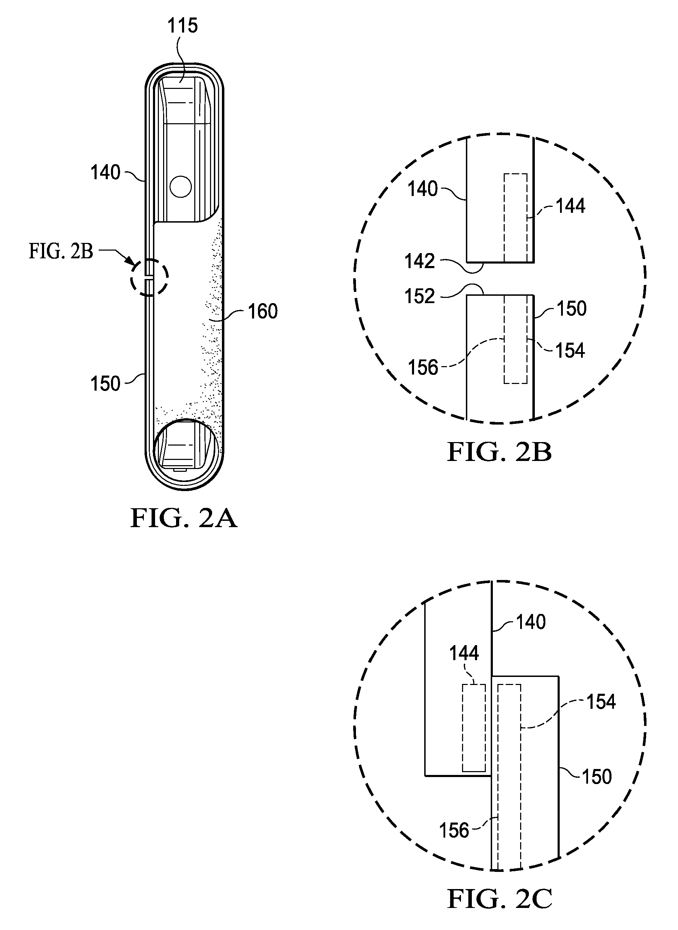

FIG. 1A is a front view of an example cover 100 for a mobile electronic device 110 with the cover 100 shown open and the mobile electronic device 110 inside. FIG. 1B is a front view of the cover 100 shown closed. The example cover 100 is but one example of a number of different forms of covers that the concepts herein can be applied to. For example, the cover can take the form of a cover, a skin, a holster, a pocket, a sleeve, a slip cover, an envelope, a folio, and/or another form. As will be described in more detail below, the example cover 100 defines a cavity 155 for receiving the mobile electronic device 110, and has a flap portion 140 that is changeable between revealing a portion of a screen 120 of the device (FIG. 1A) and covering the screen 120 (FIG. 1B). The cover 100 includes a ferrous metal element 156 magnetized by a magnet (FIG. 2B). The magnetization of the ferrous metal element 156 (i.e., magnetized or demagnetized) triggers the device 110 to respond in a specified manner. In certain instances, changing the flap portion 140 to reveal a portion of the screen 120 changes the magnetization of the ferrous metal element 156.

The mobile electronic device 110 can be hand held and can be a cellular phone, including a smart phone, a dedicated personal digital assistant (PDA) with or without phone or data capabilities, an electronic reading device, a tablet computer, a digital media player, or any other mobile device. In many instances, the terms "mobile device," "hand held device" and "hand set" are interchangeable, regarding to electronic devices available as information stores for personal contacts, calendar appointments, and the like. The mobile device can have a battery, enabling the device to be operated without a power cord. Additionally, many mobile devices wirelessly connect to the public Internet to allow for the sending and receiving of e-mail. Such mobile devices may also provide more general Internet access, such as access to the World Wide Web. For example, the mobile device 110 may be designed to operate with the General Packet Radio Service (GPRS) mobile data communication networks and may also be designed to operate with any of a variety of voice communication networks, such as AMPS, TDMA, CDMA, PCS, GSM, etc. Other types of data and voice networks, both separate and integrated, may also be utilized with the mobile device 110.

In certain instances, the mobile device 110 is a two-way RF communication device having voice and data communication capabilities. In addition, the mobile device 110 can have the capability to communicate with other mobile devices or computer systems via the Internet.

The mobile device 110 includes a front frame 130 and the screen 120. A forward facing surface of the front frame 130 forms the forward facing surface of the mobile device 110. A back cover 115 (shown in FIG. 2A) is attached to the back side of the front face and a backward facing surface of the back cover 115 defines the back surface of the mobile device 110. The front frame 130 cooperates with the back cover 115 to house inner components of the mobile device 110.

The screen 120 can be both an input device (i.e., a touch sensitive device) and an output device (i.e., a display). In some embodiments, the screen 120 is a light emitting diode (LED) backlit liquid crystal display (LCD) with multi-touch control functions. Some of these features may be omitted in other examples. For example, the screen 120 may lack the multi-touch control functions, or the screen 120 may lack the LED backlit feature. In some embodiments, the mobile device 110 may include additional features, such as a front camera.

In certain instances, the mobile electronic device 110 includes an embedded sensor that can be used by the device 110 to determine that the device 110 has been received in the cover 100. The information from the sensor can be used, for example, to signal the mobile electronic device 110 to enter or exit a low power sleep mode. In certain instances, the sensor is a magnetic field sensor that is responsive to a magnetic field (e.g., a Hall effect sensor and/or another type of sensor) produced by a magnet of the cover 100.

In certain instances, the mobile electronic device 110 includes a "peek" feature where the device 110 senses when it is received in the cover 100, and activates a special "peek" user interface (UI). When the peek UI is activated, the device 110 resides in a low power sleep mode while the screen 120 is covered. Upon sensing that the screen 120 has been partially revealed, the device 110 displays information on the portion of the screen 120 that has been revealed. In certain instances, the displayed information can be a simplified display of information that a user might want quick access to without having to fully remove the device 110 from the cover, such as, device notifications, current time, a preview of the last message received, current song title and artist from a music application, and/or other information. The device 110 can include an embedded sensor used by the device 110 to determine when the screen 120 has been revealed. The sensor can be the same sensor as used to determine that the device 110 has been received in the cover 100 or can be another sensor. In certain instances, the sensor is a magnetic field sensor that is responsive to a magnetic field (e.g., a Hall effect sensor and/or another type of sensor).

The screen 120 can be revealed in a number of different manners depending on the specific configuration of the cover. For example, a portion of the cover can be opened, a portion of the cover can be withdrawn or otherwise pulled away from the screen 120, or the device 110 can be partially withdrawn from the cover 100. Depending on the configuration, the sensor can be configured and positioned to produce a signal indicating when one or more of these events occurs.

FIG. 1A shows the device 110 with the peek UI activated. The top flap portion 140 of the cover 100 is opened to reveal a portion of the screen 120, and the sensor of the device 110 is configured to produce a signal when the top flap portion 140 has been opened. Thus, the sensor produces a signal indicating that the top flap portion 140 is open, and the device 110 responds by displaying information on a specified portion of the screen 120 that corresponds to the revealed portion of the screen 120. In FIG. 1B, the top flap portion 140 is closed, the sensor has ceased producing a signal indicating that the top flap portion 140 is open, and the device 110 responds by ceasing displaying information on the screen 120.

While the preceding discussion provides but a few examples of the "peek" feature, further explanation can be found in U.S. Patent Application 13/036,186, filed February 28, 2011, entitled "Electronic Device and Method of Displaying Information in Response to Input," and U. S. Patent Application 13/404,308, filed February 24, 2012, entitled "Peekable User Interface on a Portable Electronic Device."

The example cover 100 is made of a single, continuous piece of material, but could be made of multiple pieces. The material is thin and initially flat and has an edge or end surface that is perpendicular (substantially or precisely) to the plane of the material. A bottom flap portion 150 and side flap portions 160, 162 are folded together and attached to one another to define a body portion of the cover 100 having an interior cavity 155 that receives and circumscribes the mobile electronic device 110. In other instances, for example a folio cover, the side flap portions 160, 162 can be omitted. In the example cover 100, the bottom flap portion 150 has an inward facing interior surface, an outward facing exterior surface, and an end or edge surface 152 spans between the interior surface and the exterior surface (i.e., perpendicular to the plane of the material forming the bottom flap portion 150). The edge surface 152 defines a portion of the perimeter of the opening to the cavity 155.

The top flap portion 140 is coupled to the bottom flap portion 150, and can fold from open, shown in FIG. 1A, to closed, shown in FIG. 1B. When the top flap portion 140 is open, the interior cavity 155 is open and the mobile electronic device 110 can be inserted and removed from the interior cavity 155 of the cover 100. Additionally, a top, approximately one half, of the screen 120 is revealed, and the remainder is obscured by the bottom flap portion 150. In other instances, more or less of the screen 120 can be revealed or obscured. When the top flap portion 140 is closed, it covers the opening to the cavity 155, as well as the screen 120, and retains the mobile electronic device 110 in the interior cavity 155 of the cover 100.

FIG. 2A is a side view of the cover of FIGS. 1A and 1B shown closed. As seen in FIG. 2A, the top flap portion 140 only partially covers the opening to the cavity 155 and only partially covers the mobile electronic device 110 (leaving openings on the end). In other instances, the top flap could fully cover the opening to the cavity 155 and/or the mobile electronic device 110 or could take the form of a strap that leaves an even larger portion of the opening to the interior cavity 155 uncovered. Like the bottom flap portion 150, the top flap portion 140 has an interior surface that is inward facing when the flap portion is closed, an exterior surface that is outward facing when the flap is closed, and an end or edge surface 142 (FIG. 2B) spanning between the interior surface and the exterior surface (i.e., perpendicular to the plane of the material forming the top flap portion 140).

FIG. 2B is a half, side cross-sectional detail view of the cover of FIGS. 1A and 1B taken through the top flap portion 140 and bottom flap portion 150, intermediate the sides of the cover 100. When the top flap portion 140 is closed, the edge surface 142 resides meeting the edge surface 152, adjacent to and in certain instances abutting the edge surface 152. Additionally, when the top flap portion 140 is closed, the top flap portion 140 and bottom flap portion 150 do not overlap, and the exterior surface of the top flap portion 140 is flush with the exterior surface of the bottom flap portion 150. Such a non-overlapping edge surface to edge surface closed configuration is more compact than if the top flap portion 140 and bottom flap portion 150 were to overlap. Furthermore, because the top flap portion 140 and bottom flap portion 150 do not overlap, they do not create a pressure point on the device 110.

Alternately, as in FIG. 2C, the top flap portion 140 can overlap the bottom flap portion 150, with the interior surface of the top flap portion 140 abutting the exterior surface of the bottom flap portion 150.

The views in FIG. 2B and 2C show a magnetic clasp having a first part 154 in the bottom flap portion 150 and a second part 144 in the top flap portion 140. In FIG. 2B, the first part 154 magnetically clasps to the second part 144 when the edge surface 142 of the flap portion 140 is adjacent to the edge surface 152 of the bottom flap portion 150, and holds the two flap portions 140, 150 together and the top flap portion 140 closed. In FIG. 2C, the first part 154 magnetically clasps to the second part 144 when the parts 144, 154 overlap. Both of the magnetic clasp parts 144, 154 can include magnets (one or more magnets in each part 144, 154) with their poles aligned so that the magnets magnetically attract to one another and effectuate the clasping. Alternately, in some instances, one part (either the first part 154 in the bottom flap portion 150 or the second part 144 in the top flap portion 140) can include one or more magnets and the other part includes the ferrous metal element 156 that is magnetically attracted to the magnet. The magnetic clasp parts 144, 154 are planar (substantially or entirely), i.e. thin and flat, and embedded in the top flap portion 140 and bottom flap portion 150, respectively.

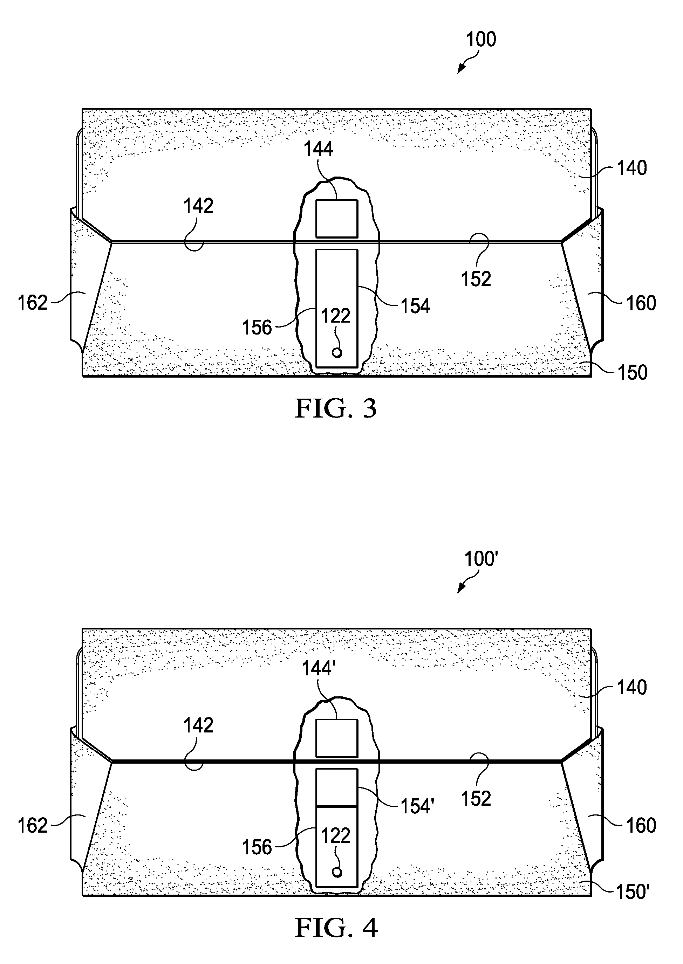

FIG. 3 is a front view of the cover 100 cut away to show the magnetic clasp parts 144, 154 and the ferrous metal element 156. FIG. 3 also shows the sensor location 122 of the sensor used by the device 110 to determine that the device 110 is in the cover 100 and/or used in operating the peek UI. In the configuration of FIG. 3, the magnetic clasp part 144 on the top flap portion 140 is one or more magnets and clasp part 154 on the bottom flap portion 150 is the ferrous metal element 156. In FIG. 3, the ferrous metal element 156 extends from the location where it meets the clasp part 144 (adjacent the edge surface 152 at the opening to the cavity) to a location over the sensor location 122. When the magnetic clasp part 144 is adjacent or abuts the ferrous metal element 156 of clasp part 154, either edge surface to edge surface as in FIG. 2B or overlapping as in FIG. 2C, the ferrous metal element 156 is magnetized by the magnetic field of the clasp part 144. The resulting magnetic field of the ferrous metal element 156 actuates the sensor of the device 110 to produce a signal that indicates to the device 110 that it is in the cover 100 and the top flap portion 140 is closed. The magnet of the magnetic clasp part 144, however, always remains apart enough from the sensor location that it does not actuate (substantially or at all) the sensor when the device 110 is fully received in the cover 100. When the magnetic clasp part 144 is apart from ferrous metal element 156 of clasp part 154, the ferrous metal element 156 loses its magnetic field. Correspondingly, the sensor ceases producing the signal, indicating to the device 110 that the top flap portion 140 is open and/or the device 110 has been removed from the cover 100. In the example of a Hall sensor, the Hall sensor outputs a voltage when the top flap portion 140 is closed generating a magnetic field in the ferrous metal element 156 over the sensor. The Hall sensor ceases outputting the voltage when the top flap portion 140 is open and the magnetic field of the ferrous metal element 156 has ceased.

In an example of a device 110 having a sensor to determine that the device 110 has been received in the cover 100, upon closing the top flap portion 140 a magnetic field is generated in the ferrous metal element 156. The magnetic field is sensed by the sensor, and in turn, the sensor produces a signal indicating the presence of the magnetic field and indicating to the device 110 that it has been received in a cover. If so configured, the signal actuates the mobile electronic device 110 to enter a low power sleep mode. When the top flap portion 140 is opened, the magnetic field in the ferrous metal element 156 ceases, the sensor ceases producing the signal indicating the presence of the magnetic field. If so configured, the signal actuates the mobile electronic device 110 to exit the low power sleep mode. In an example of a device 110 having a "peek" feature, the magnetic field generated in the ferrous metal element 156 when the top flap portion 140 is closed causes the sensor to produce a signal that indicates to the device that the screen (e.g., screen 120 of FIG. 1A) is covered. As a result, the device 110 enters into a low power sleep mode. When the top flap portion 140 is opened and the magnetic field in the ferrous metal element 156 ceases, the sensor ceases producing the signal that indicates to the device that the screen is covered, i.e., indicating to the device that the screen is partially revealed. In response, the device 110 displays information on the portion of the screen that has been revealed, for example, as shown in FIG. 1A. In certain instances, a second sensor and magnet and/or magnetized ferrous metal element can be used to additionally signal to the device 110 that it is in a cover.

FIG. 4 is a front view of another example cover 100' cut away to show the magnetic clasp parts 144', 154'. In this configuration, the ferrous metal element 156 is distinct from the magnetic clasp parts 144', 154', positioned in the bottom flap portion 150 abutting the magnetic clasp part 154' and extending to a location over the sensor location 122. Magnetic clasp part 154' is a magnet, and ferrous metal element 156 is positioned adjacent and/or abutting the magnet of clasp part 154'. Thus, in this configuration, the ferrous metal element 156 is always magnetized by the magnet of clasp part 154'. The magnet of the magnetic clasp part 154', however, always remains apart enough from the sensor location that it does not actuate (substantially or at all) the sensor when the device 110 is fully received in the cover 100'. When the mobile electronic device 110 is received in the cover 100', and the sensor is positioned under the ferrous metal element 156, the sensor is triggered to produce a signal indicating to the device 110 that the device 110 is in the cover 100. When the device 110 is removed from the cover 100', the magnetic field of the ferrous metal element 156 is no longer over the sensor. The sensor ceases producing the signal, indicating to the device 110 that the device 110 has been removed from the cover 100. In the example of a Hall sensor, the Hall sensor outputs a voltage when the device 110 is received in the cover 110' and the magnetic field of the ferrous metal element 156 is over the sensor, and ceases outputting the voltage when the device 110 is removed from the cover 110' and the magnetic field of the ferrous metal element 156 is apart from the sensor.

In example configurations, cover 100 (FIG. 3) and cover 100' (FIG. 4), the ferrous metal element 156 extends across the cover to a location over the sensor location 122 and to an edge of the cover 100, 100'. In certain instances, for example to accommodate misalignment of the device 110 within the cover 100, the ferrous metal element 156 can be oversized, and extend beyond the sensor location in one, more or all directions. In certain instances, due to the position of the sensor in the device 110, the location of the sensor relative to the cover 100 can be different in different orientations of the device 110 relative to the cover 100. Accordingly, in certain instances, the cover 100 can include more than one ferrous metal element 156, continually magnetized as in FIG. 4 or magnetized only when near a magnet as in FIG. 3, to be positioned over two or more or all of the expected sensor locations. Additionally or alternatively, one or more ferrous metal elements 156 can be used together with magnets to be positioned over two or more or all of the expected sensor locations. Additionally, or alternatively, one ferrous metal element 156 can be positioned over two or more or all of the expected sensor locations.

By way of example, if the device 110 were to be placed in the cover 100 rotated in the vertical plane 180° from the depicted position, the sensor location 122 would be beneath the top flap portion 140 rather than beneath the bottom flap portion 150. Thus, to accommodate, the cover can be provided with an additional ferrous metal element 156 in the top flap portion 140, the ferrous metal element 156 in the bottom flap portion 150 can extend around into the top flap portion 140, and/or the magnet in the clasp part 144 can be positioned to trigger the sensor. If the sensor is not on a centerline of the device 110, as it is in FIGS. 3 and 4, there are four possible sensor locations 122 depending on the orientation of the device. Thus, to accommodate, the cover can be provided with additional ferrous metal elements 156 and/or one or more of the ferrous metal elements 156 can extend, to the left and/or right of the clasp parts 144, 154, to multiple of the four possible sensor locations 122.

As is apparent from the discussion above, the concepts herein encompass a cover for a mobile electronic device that has a ferrous metal element magnetized by a magnet of the cover. The ferrous metal element is used in actuating a sensor of the device. The ferrous metal element can be continuously magnetized by the magnetic field of the magnet or can be changed between magnetized or not magnetized by changing the cover to move the magnet apart from the ferrous metal element. In certain instances, the ferrous metal element is changed between magnetized and not magnetized by changing the cover from closed to open.

Because the ferrous metal element can be made of a material (e.g., steel and/or other ferrous metals) that is less brittle than most rare Earth magnetic materials, the element can span greater distances through the cover with less risk of breaking as the cover flexes. Moreover, the ferrous metal element can form a larger magnetic target to accommodate misalignment of the device in the cover. A single ferrous metal element can take a number of different symmetric or non-symmetric to communicate a magnetic field to different locations within the cover, for example, to actuate multiple sensors and/or to actuate a given sensor in different positions in the cover.

Although the concepts herein have been described with respect to a cover having a top flap portion that is clasped to a bottom flap portion, the concepts are applicable to many other configurations. For example, the concepts could be applied to side flaps, pockets, accessory loops and/or other aspects of a mobile electronic device cover. Additionally, the concepts could be applied to other styles of covers. For example, as applied to a folio style cover, the top flap portion could be the end-most flap of the cover and contain a ferrous metal element positioned to provide a magnetic field that triggers the sensor when the flap is closed onto the device and cease providing a magnetic field when the flap is opened away from the device. Still further examples exist.

A number of variations have been described. Nevertheless, it will be understood that various modifications may be made. Accordingly, other variations are within the scope of the following claims.

## Claims

1. A cover for a mobile electronic device, the mobile electronic device comprising a sensor responsive to a magnetic field, the cover comprising:
a body portion defining an interior cavity for receiving the mobile electronic device;
a magnet carried by the cover; and
a ferrous metal element carried by the cover, the ferrous metal element is magnetized by the magnet and positioned to be adjacent the sensor when the mobile electronic device is received in the interior cavity.

2. The cover of claim 1, where the magnet is positioned apart from the sensor when the mobile electronic device is received in the interior cavity and the magnetic field generated by the magnet does not directly actuate the sensor to produce a signal.

3. The cover of claim 1, where the cover further comprises a flap portion that is closeable to at least partially cover an opening to the cavity;
where the cover further comprises a magnetic clasp comprising a first part carried by the body portion that clasps with a second part carried by the flap portion; and
where at least one of the first part or the second part of the magnetic clasp comprises the ferrous metal element.

4. The cover of claim 3, where the first part comprises the ferrous metal element and the second part comprises the magnet, and the ferrous metal element is magnetized by the magnet when the flap portion is closed and is apart from the magnet and not magnetized when the flap is open.

5. The cover of claim 4, where the flap portion does not overlap the body portion when the flap portion is closed.

6. The cover of claim 5, where the flap portion is substantially planar and the magnet has a pole at an edge surface oriented in the plane of the flap portion, and where the edge surface of the magnet is adjacent an edge surface of the ferrous metal element when the flap portion is closed.

7. The cover of claim 4, where the flap portion overlaps the body portion when the flap portion is closed.

8. The cover of claim 3, where the ferrous metal element extends from the opening of the cavity to an edge of the body portion.

9. The cover of claim 3, where the sensor of the mobile electronic device actuates a display on a portion of a screen of the device, and the flap is sized to reveal the portion of the screen with the display when the flap is open.

10. The cover of claim 1, where the magnet is substantially planar and the magnet has a pole at an edge surface oriented in the plane of the magnet, and where the edge surface of the magnet is adjacent an edge surface of the ferrous metal element.

11. The cover of claim 1, where the cover further comprises a flap portion closable to at least partially cover the mobile electronic device and when open, reveal a portion of the mobile electronic device.

12. A method, comprising:
generating a magnetic field in a ferrous metal element of a mobile electronic device cover with a magnet of the mobile electronic device cover; and
actuating, with the magnetic field of the ferrous metal element, a sensor of a mobile electronic device to provide a signal, the mobile electronic device being received in the cover.

13. The method of claim 12, where the magnet is apart from the sensor of the mobile electronic device and does not substantially actuate the sensor.

14. The method of claim 12, where generating a magnetic field in a ferrous metal element of a mobile device cover with a magnet of the mobile device cover comprises:
bringing the magnet, carried on a first portion of the cover, together with a second portion of the cover carrying the ferrous metal element when the first portion of the cover is closed to the second portion of the cover.

15. A mobile electronic device cover for actuating a sensor of a mobile electronic device received in the cover, the cover comprising:
a ferrous metal element positioned in the cover to reside adjacent the sensor when the mobile electronic device is received in the cover; and
a magnet magnetizing the ferrous metal element and apart from the sensor.
